# EUROPÄISCHE PATENTANMELDUNG

(11) **EP 2 180 670 A1**
(43) Veröffentlichungstag der Anmeldung: **28.04.2010**
(21) Anmeldenummer: 09173785.8
(22) Anmeldetag: 22.10.2009
(51) Int. Cl.: H04M 1/247, H04M 7/00, H04M 3/51

(54) **Telefonsysteme und Kommunikationsendgeräte für eine Verwendung in solchen Telefonsystemen**

(30) Priorität: 27.10.2008 DE 102008053349
(71) Anmelder: Gigaset Communications GmbH, 81379 München (DE)
(72) Erfinder: Mösker, Volker, 46419, Isselburg (DE)
(74) Vertreter: Schulz, Dirk

(57) **Zusammenfassung**

Zur Erhöhung des Komforts beim Telefonieren entweder über eine Telefonleitung (T) oder über ein öffentliches Datennetz (INTERNET) werden das öffentliche Datennetz (INTERNET) umfassende Telefonsysteme vorgeschlagen, bei denen zur Sprachübertragung(SD; SIN) entweder über eine Telefonleitung (T) oder über das öffentliche Datennetz (INTERNET) eine parallele und in Kombination mit der Sprachübertragung (SD; SIN) eine nicht Sprache übertragende Datenübertragung (SN) über das öffentliche Datennetz (INTERNET) realisiert sind. Kommunikationsendgeräte (4, 5) für eine Verwendung in solchen Telefonsystemen weisen technische Mittel (SD; SIN; SN; S; S1; S2) auf in der Weise, dass durch diese technischen Mittel bei zwei Anschlussmöglichkeiten (S1; S2) für einen jeweiligen Anschluss an eine Telefonleitung (T) und ein öffentliches Datennetz (INTERNET) eine Sprachübertragung (SIN) über die Telefonleitung (T) und parallel und kombiniert dazu eine nicht Sprache übertragende Datenübertragung (SN) über das öffentliche Datennetz (INTERNET) oder bei einer Anschlussmöglichkeit (S) für einen Anschluss an das öffentliche Datennetz (INTERNET) eine parallele und miteinander kombinierte Sprachübertragung (SD) und nicht Sprache übertragende Datenübertragung (SN) bewerkstelligt ist.

## Beschreibung

Die Erfindung betrifft Telefonsysteme gemäß den Oberbegriffen der Ansprüche 1 oder 5 und Kommunikationsendgeräte für eine Verwendung in solchen Telefonsystemen gemäß den Oberbegriffen der Ansprüche 11 oder 12.

Es ist bekannt, dass bei Anrufen bei unterschiedlichen Institutionen, beispielsweise bei sogenannten Callcentern oder sogenannten Hotlines, beispielsweise von Versicherungen, Netzbetreibern, Autofirmen und so weiter, der Anrufer vorab mit einer automatischen Sprachmenüführung konfrontiert wird.

Zum Beispiel erhält der Anrufer automatisiert die Aufforderung, über die Telefon-Tastatur oder die gesprochene Sprache, die Ziffer eins auszuwählen, wenn es sich bei dem Anruf zugrunde liegenden Anliegen beispielsweise um eine Vertragsangelegenheit handelt, oder die Ziffer zwei auszuwählen, wenn es sich dabei beispielsweise um eine Schadensangelegenheit handelt, oder die Ziffer drei auszuwählen, wenn es sich dabei um eine technische Fragestellung handelt, und so weiter.

Ferner ist so etwas auch im Zusammenhang mit Anrufen bekannt, die mit Hilfe von Internet fähigen Kommunikationsendgeräten über ein öffentliches Datennetz, wie zum Beispiel das Internet, bewerkstelligt werden.

Bekannt ist auch, dass mit dieser Methode Kundennummern, Kontonummern und andere numerische Daten übertragen werden.

Grundlage für die Sprachübertragung über das öffentliche Datennetz ist die Umwandlung des Gesprochenen in Sprachdaten oder die Umwandlung gedrückter Nummerntasten in Tondaten, die prinzipiell den Sprachdaten entsprechen.

Die Tondaten werden dabei entweder nach dem MFV- (Mehrfrequenzwahlverfahren) oder dem DTMF-Verfahren (Doppeltonmehrfrequenzwahlverfahren) erzeugt, wenn es sich bei dem betreffenden Kommunikationsendgerät um ein Kommunikationsendgerät handelt, das die Sprachübertragung über eine Telefonleitung bewerkstelligt.

Buchstaben zum Beispiel können auf einem solchen Weg jedoch nicht übertragen werden. Auch erhält der Anrufer keine optische Rückmeldung, welche Informationsnachricht er letztlich übermittelt.

Aufgabe der vorliegenden Erfindung ist es, ausgehend von Telefonsystemen der eingangs genannten Arten, diese in der Weise technisch zu verbessern, dass ein erhöhter Komfort beim Telefonieren erhalten wird.

Ferner ist es Aufgabe der vorliegenden Erfindung, ausgehend von Kommunikationsendgeräten der eingangs genannten Art, diese in der Weise technisch zu verbessern, dass damit der erhöhte Komfort beim Telefonieren erhalten wird.

Bezüglich des ersten Teils der genannten Aufgabe wird dieser Teil der Aufgabe erfindungsgemäß durch Telefonsysteme gelöst, die die in den kennzeichnenden Teilen der Ansprüche 1 oder 5 angegebenen Merkmale aufweisen.

Bezüglich des zweiten Teils der vorgenannten Aufgabe wird dieser Teil der Aufgabe erfindungsgemäß durch Kommunikationsendgeräte gelöst, die die in den kennzeichnenden Teilen der Ansprüche 11 oder 12 angegebenen Merkmale aufweisen.

Kern der erfindungsgemäßen Maßnahmen sowohl bezüglich der Telefonsysteme als auch der Kommunikationsendgeräte ist, dass innerhalb einer bestehenden Kommunikationsverbindung, die eine Telefonverbindung über eine Telefonleitung oder eine Datenverbindung über das öffentliche Datennetz sein kann, nicht nur Sprachinformationen in Form von Sprachsignalen bei einer Telefonverbindung oder Sprachdaten bei einer Datenverbindung übermittelt werden, sondern parallel und in Kombination damit auch nicht Sprache übertragende Datenübertragungen über das öffentliche Datennetz bewerkstelligt werden.

Mit den erfindungsgemäßen Telefonsystemen und den erfindungsgemäßen Kommunikationsendgeräten für eine Verwendung in solchen Telefonsystemen lassen sich zu Übertragungen von Sprachsignalen über eine Telefonleitung oder Sprache übertragenden Datenübertragungen über ein öffentliches Datennetz parallel und in Kombination dazu weitere Informationsdaten weitere Informationen übermitteln, die beim Sender und/oder Empfänger auch bildlich darstellbar sind. Damit kann ein Kommunikationsteilnehmer an einer bestehenden Kommunikationsverbindung innerhalb der bestehenden Telefonverbindung parallel zur Sprache auch textliche, grafische und so weiter, also nicht sprachliche Informationen übermitteln, die visualisierbar sind. Auf diese Weise ist einerseits für einen Sender und/oder Empfänger ersichtlich, welche Daten übertragen werden beziehungsweise übertragen worden sind, und andererseits kann ein Sender mit den zusätzlich übertragenen Informationen oder Ereignissen Sprachinformationen zum Beispiel bildlich oder anderweitig unterstützen.

Fordert beispielsweise ein oben schon angesprochenes Callcenter oder eine oben angesprochene Hotline sprachlich nach Eingaben auf, können beispielsweise die möglichen Alternativen einer Antwort auch optisch beim Empfänger angezeigt werden. Es kann also ein so genanntes Incall-Menü übermittelt und optisch angezeigt werden.

Weiter können die zum Antworten getätigten Eingaben wieder gleich optisch angezeigt werden, so dass, wie schon erwähnt, sofort erkennbar ist, was gesendet wird beziehungsweise gesendet worden ist.

Auch lassen sich auf diese Weise nicht nur Menüs auf dem Telefondisplay platzieren, sondern auch Erläuterungen, Eingabefelder und so weiter. Das heißt, es lassen sich alle Arten von Informationen anzeigen, die insbesondere textlich oder grafisch darstellbar sind.

Über einen möglichen Rückübertragungskanal können Tastatureingaben, Editortexte und so weiter an den Telefonpartner, zum Beispiel das Callcenter, wieder zurück übertragen werden.

Erfindungsgemäße Kommunikationsendgeräte für eine Verwendung in den erfindungsgemäßen Telefonsystem weisen entsprechende technische Komponenten auf, mit deren Hilfe die erfindungsgemäßen Kommunikationsendgeräte in der Lage sind, die Funktionen für eine über einen bestehenden Sprachkanal bewerkstelligte Sprachübertragung parallele und mit der Sprachübertragung kombinierte Datenübertragung zu bewerkstelligen.

In Summe wird damit ein wesentlich komfortableres Telefonieren, egal ob über eine Telefonleitung oder über ein öffentliches Datennetz, ermöglicht.

Vorteilhafte Ausgestaltungen der Erfindung sind Gegenstand von Unteransprüchen.

Danach wird während eines Aufbaus einer Telefonverbindung über die Telefonleitung oder nach einem solchen Aufbau eine Zuordnung zwischen zur Telefonverbindung gehörenden Rufnummern und den Rufnummern zugeordneten Menüservern betriebswirksam hergestellt, so dass die Hinzunahme von zusätzlichen Informationen in eine bestehende und betreffende Telefon- beziehungsweise Kommunikationsverbindung hinein zuordnungsrichtig sichergestellt ist.

Dabei kann die Zuordnung nach Art der Funktionalität eines DNS-Servers (Domain Name System-Server), hier jedoch auf die paarweise Zuordnung zwischen Rufnummern und Menüservern zugeschnitten, oder durch eine geeignete Signalisierung im Kanal für die Sprachübertragung bewerkstelligt sein, um die gewünschte Funktionalität zu erhalten.

Bei den erfindungsgemäßen Maßnahmen ist es unerheblich, ob der Anschluss an eine Telefonleitung, soweit eine solche zum Einsatz kommt, als analoger Telefonanschluss oder gemäß dem ISDN-Standard oder gemäß entsprechenden anderen Funktionalitäten realisiert ist.

Vorteilhaft bei den erfindungsgemäßen Maßnahmen ist insbesondere, dass eine sprachlich geführte Kommunikation zum Beispiel mit textliche und/oder grafische Inhalte aufweisenden und damit optisch darstellbaren Zusatzinformationen unterstützt werden kann.

Soweit wenigstens eines der Kommunikationsendgeräte als Ganzes gesehen technische Mittel umfasst, die Institutionen aufweisen, die für Informationsabfragen ausgerüstet sind, bedeutet dies, dass an Stelle eines einfachen Kommunikationsendgeräts auch eine entsprechende Institution an einer betreffenden Kommunikationsverbindung beteiligt sein kann.

Beispiele für solche Institutionen sind die schon erwähnten Callcenters und Hotlines. Derartige Institutionen möchten in der Regel Vorabinformationen mit vorab bekannten Alternativantworten haben. Diese können parallel zum Telefongespräch auf diese Weise sehr bequem textlich und/oder grafisch als so genanntes Incall-Menü angeboten werden, was den Telefonierkomfort wesentlich erhöht.

Es spielt dabei keine Rolle, ob zum Beispiel zur Auswahl gestellte Alternativen und/oder Zusatzinformationen automatisch oder manuell generiert werden. Die erfindungsgemäßen Maßnahmen lassen sich in beiden Fällen nutzen.

In besonders einfacher Weise und damit in vorteilhafter Weise lassen sich die erfindungsgemäßen Maßnahmen insbesondere bei Kommunikationsendgeräten, die technische Mittel haben, durch die Funktionalitäten implementiert sind, die den Funktionalitäten eines so genannten VoIP-Geräts (Voice over Internet Protocol-Gerät) entsprechen, einsetzen. Bei solchen Geräten wird die gesprochene Sprache ohnehin in Sprachdaten umgewandelt, die als Daten über ein öffentliches Datennetz in einfacher Weise zu übertragen sind. Weiter lassen sich diese Daten ohne weiteres mit anderen Daten, wie zum Beispiel entsprechende Zusatzinformationen, die später optisch darstellbar sind, kombinieren und gleich mit übertragen.

Nachfolgend werden Ausführungsbeispiele der Erfindung anhand einer Zeichnung näher erläutert. Darin zeigen:
- Figur 1: ein Telefonsystem erster Art gemäß der Erfindung mit Kommunikationsendgeräten erster Art gemäß der Erfindung, und
- Figur 2: ein Telefonsystem zweiter Art gemäß der Erfindung mit Kommunikationsendgeräten zweiter Art gemäß der Erfindung.

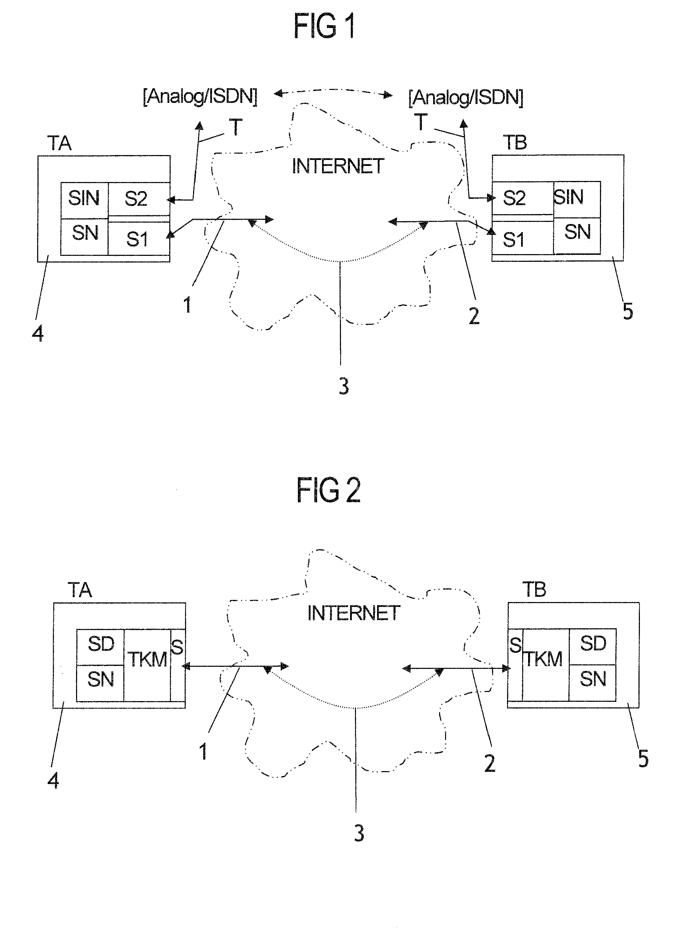

Die Figur 1 zeigt ein erstes erfindungsgemäßes Telefonsystem, welches ein öffentliches Datennetz INTERNET mit technischen Mitteln 1, 2, 3 für zumindest nicht Sprache übertragende Datenübertragungen zwischen wenigstens zwei am öffentlichen Datennetz INTERNET angeschlossenen Teilnehmern TA und TB umfasst. Dabei sind unter nicht Sprache übertragende Datenübertragungen alle sonstigen Informationsnachrichten SN zu verstehen, die nicht als Sprachdaten SD (Figur 2) übertragen sind. Explizite Beispiele für solche sonstigen Informationsnachrichten SN sind Informationsnachrichten, die textlichen und/oder grafischen Inhalt haben.

Dem jeweiligen Teilnehmer TA, TB ist ein Kommunikationsendgerät 4, 5 zugeordnet, das am öffentlichen Datennetz INTERNET angeschlossen ist. Die Kommunikationsendgeräte 4, 5 sind über Verbindungsleitungen ausgehend von einer im Kommunikationsendgerät 4, 5 integrierten ersten Schnittstelle S1 am öffentlichen Datennetz INTERNET angeschlossen. Die Verbindungsleitungen sind dabei als technische Mittel 1, 2 zu den technischen Mitteln 1, 2, 3 gezählt, die für die zumindest nicht Sprache übertragenden Datenübertragungen benötigt sind. Die bis jetzt noch nicht näher angesprochenen technischen Mitteln 3 sind all jene benötigten technischen Mitteln, die innerhalb des öffentlichen Datennetzes INTERNET benötigt sind, um die zumindest nicht Sprache übertragenden Datenübertragungen über das öffentliche Datennetz INTERNET insgesamt zu ermöglichen.

Gemäß der Figur 1 weisen die Kommunikationsendgeräte 4, 5 zweite Schnittstellen S2 auf, an die eine Telefonleitung T anschließbar ist.

Die Telefonleitung T kann dabei zum Beispiel ein analoger Anschluss oder ein Anschluss gemäß der ISDN-Technik sein. Andere Anschlusstechniken sind aber an dieser Stelle ebenfalls denkbar.

Gemäß der Figur 1 werden sprachliche Informationsnachrichten SIN über die Telefonleitung T zwischen den Teilnehmern TA, TB ausgetauscht.

Parallel zum Austausch von sprachlichen Informationsnachrichten SIN über die Telefonleitung T können über das öffentliche Datennetz INTERNET sonstige Informationsnachrichten SN ausgetauscht werden, mit deren Hilfe der Austausch der sprachlichen Informationsnachrichten zum Beispiel bildlich unterstützt wird.

Für die bildliche Wiedergabe der sonstigen Informationsnachrichten SN weisen die Kommunikationsendgeräte 4, 5 der Teilnehmer TA, TB entsprechende technische Mittel wie zum Beispiel ein Display auf, die in den Figuren nicht näher kenntlich gemacht sind. Entsprechendes gilt für die technischen Mittel, die benötigt sind, um die sonstigen Informationsnachrichten SN eingeben zu können. Im Detail sind solche technischen Mittel in erster Linie eine Tastatur mit entsprechenden Tasten und entsprechende integrierte Nutzprogramme, um die gewünschten sonstigen Informationsnachrichten kreieren zu können.

Ebenfalls sind in der Figur 1 keine Details über technische Mittel dargestellt, die dafür sorgen, dass während eines Aufbaus einer Telefonverbindung über die Telefonleitung T oder nach einem solchen Aufbau eine Zuordnung zwischen zur Telefonverbindung zweier Teilnehmer TA, TB gehörenden Rufnummern und den Rufnummern zugeordneten Menüservern betriebswirksam hergestellt ist. Solche technischen Mittel sind aber im Hintergrund des in der Figur 1 gezeigten Telefonsystems vorhanden, wobei diese technischen Mittel ebenfalls in den Kommunikationsendgeräten 4, 5 der Teilnehmer TA, TB integriert sind.

Allgemein betrachtet stellen die Kommunikationsendgeräte 4, 5 gemäß der Figur 1 eine Art Hybridtelefon dar, mit denen ein sprachliches Telefonieren über einen herkömmlichen Telefonanschluss (analog, ISDN) und über eine öffentliche Datennetz-Verbindung die koordinierte Übertragung zugehöriger sonstiger Informationsnachrichten erfolgt.

In der Figur 2 ist ein weiteres Telefonssystem gemäß der Erfindung gezeigt, das dem Wesen nach dem Telefonsystem gemäß der Figur 1 entspricht. Der wesentliche Unterschied liegt jedoch darin, dass bei diesem Telefonsystem die sprachlichen Informationsnachrichten ebenfalls über das öffentliche Datennetz INTERNET übertragen werden. Hierzu werden aber die sprachlichen Informationsnachrichten in Sprachdaten SD umgewandelt und als solche Sprachdaten SD über das öffentliche Datennetz INTERNET übertragen.

Die Kommunikationsendgeräte 4, 5 der Teilnehmer TA, TB weisen deshalb für die zu übertragenden Sprachdaten SD und sonstigen Informationsnachrichten SN eine gemeinsame Schnittstelle S auf, über die bidirektional die Informationen parallel und miteinander kombiniert übertragen werden.

Damit die Sprachdaten SD und die sonstigen Informationsnachrichten SN parallel und miteinander kombiniert übertragen werden können, weisen die Kommunikationsendgeräte 4, 5 der Teilnehmer TA, TB technische Trenn- und Kombinations-Mittel TKM auf, die in Senderichtung die Sprachdaten und die sonstigen Informationsnachrichten SN miteinander kombinieren, und in Empfangsrichtung die Sprachdaten und die sonstigen Informationsnachrichten SN wieder trennen.

Die Kommunikationsendgeräte 4, 5 sowohl gemäß der Figur 1 als auch gemäß der Figur 2 können im Grunde genommen als ein VoIP-Gerät (Voice over IP-Gerät) ausgebildet sein, das zusätzlich die spezifischen Komponenten aufweist für eine Verwendung in einem der Telefonsysteme gemäß der Figur 1 oder 2.

## Patentansprüche

1. Telefonsystem, aufweisend Kommunikationsendgeräte mit Anschlussmöglichkeit an ein öffentliches Datennetz, und aufweisend ein öffentliches Datennetz, an das die Kommunikationsendgeräte angeschlossen sind, **dadurch gekennzeichnet, dass** die Kommunikationsendgeräte (4; 5) eine Anschlussmöglichkeit (S2) aufweisen für einen Anschluss an eine Telefonleitung (T), dass die Kommunikationsendgeräte (4; 5) parallel zum Anschluss (S1) an das öffentliche Datennetz (INTERNET) an die Telefonleitung (T) angeschlossen sind, dass Sprachübertragungen (SIN) über die Telefonleitung (T) bewerkstelligt sind und dass mit den Sprachübertragungen (SIN) kombiniert nicht Sprache übertragende Datenübertragungen (SN) über das öffentliche Datennetz (INTERNET) bewerkstelligt sind.

2. Telefonsystem nach Anspruch 1, **dadurch gekennzeichnet, dass** während eines Aufbaus einer Telefonverbindung über die Telefonleitung (T) oder nach einem solchen Aufbau eine Zuordnung zwischen zur Telefonverbindung gehörenden Rufnummern und den Rufnummern zugeordneten Menüservern betriebswirksam hergestellt ist.

3. Telefonsystem nach Anspruch 2, **dadurch gekennzeichnet, d**a**ss** die Zuordnung nach Art der Funktionalität eines DNS-Servers, hier jedoch bezogen auf die paarweise Zuordnung zwischen Rufnummern und Menüservern, oder durch eine geeignete Signalisierung im Kanal für die Sprachübertragung bewerkstelligt ist.

4. Telefonsystem nach einem der vorherigen Ansprüche, **dadurch gekennzeichnet dass** der Anschluss (S2) an die Telefonleitung (T) als analoger Telefonanschluss gemäß dem ISDN-Standard oder gemäß entsprechenden anderen Funktionalitäten realisiert ist.

5. Telefonsystem, aufweisend Kommunikationsendgeräte mit Anschlussmöglichkeit an ein öffentliches Datennetz, und aufweisend ein öffentliches Datennetz, an das die Kommunikationsendgeräte angeschlossen sind, **dadurch gekennzeichnet, dass** Sprachübertragungen (SD) und damit kombiniert nicht Sprache übertragende Datenübertragungen (SN) über das öffentliche Datennetz (INTERNET) bewerkstelligt sind.

6. Telefonsystem nach einem der vorherigen Ansprüche, **dadurch gekennzeichnet, dass** nicht Sprache übertragende Datenübertragungen (SN) textlichen und/oder grafischen Inhalt aufweisen.

7. Telefonsystem nach einem der vorherigen Ansprüche, **dadurch gekennzeichnet, dass** wenigstens eines der Kommunikationsendgeräte (4; 5) als Ganzes gesehen technische Mittel umfasst, die Institutionen aufweisen, die für Informationsabfragen ausgerüstet sind.

8. Telefonsystem nach Anspruch 7, **dadurch gekennzeichnet, dass** eine Institution ein Callcenter oder eine Hotline ist.

9. Telefonsystem nach einem der vorherigen Ansprüche, **dadurch gekennzeichnet, dass** Sprachübertragungen (SD) und/oder nicht Sprache übertragende Datenübertragungen (SN) in einer automatischen Weise generiert sind.

10. Telefonsystem nach einem der vorherigen Ansprüche, **dadurch gekennzeichnet, dass** Sprachübertragungen (SD) und/oder nicht Sprache übertragende Datenübertragungen (SN) in einer manuellen Weise generiert sind.

11. Kommunikationsendgerät für eine Verwendung in einem Telefonsystem nach einem der Ansprüche 1 bis 10, aufweisend eine Anschlussmöglichkeit für einen Anschluss an ein öffentliches Datennetz, **dadurch gekennzeichnet, dass** eine Anschlussmöglichkeit (S2) vorgesehen ist für einen zum Anschluss an das öffentliche Datennetz (INTERNET) parallelen Anschluss an eine Telefonleitung (T) für eine Sprachübertragung (SIN), und dass für die parallelen Anschlussmöglichkeiten (S1; S2) technische Mittel vorgesehen sind in der Weise, dass über diese parallelen Anschlussmöglichkeiten (S1; S2) parallele und miteinander kombinierte Sprachübertragungen (SIN) und sonstige Informationsübertragungen (SN) bewerkstelligbar sind.

12. Kommunikationsendgerät für eine Verwendung in einem Telefonsystem nach einem der Ansprüche 5 bis 10, aufweisend eine Anschlussmöglichkeit für einen Anschluss an ein öffentliches Datennetz, **dadurch gekennzeichnet, dass** für diese Anschlussmöglichkeit (S) technische Mittel vorgesehen sind in der Weise, dass über diese Anschlussmöglichkeit (S) eine Sprachübertragung (SD) und nicht Sprache übertragende Datenübertragung (SN) parallel und in Kombination miteinander bewerkstelligbar ist.

13. Kommunikationsendgerät nach Anspruch 12, **dadurch gekennzeichnet, dass** technische Mittel vorgesehen sind, durch die Funktionalitäten implementiert sind, die den Funktionalitäten eines so genannten VoIP-Geräts entsprechen.
